# EUROPEAN PATENT APPLICATION

(11) **EP 3 197 197 A1**
(43) Date of publication of application: **26.07.2017**
(21) Application number: 15852650.9
(22) Date of filing: 22.10.2015
(51) Int. Cl.: H04W 24/00

(54) **DATA TRANSMISSION METHOD AND STATION**

(30) Priority: 23.10.2014 CN 201410571221
(71) Applicant: ZTE Corporation, Shenzhen, Guangdong 518057 (CN)
(72) Inventor: LV, Kaiying, Shenzhen Guangdong 518057 (CN); LI, Nan, Shenzhen Guangdong 518057 (CN); XING, Weimin, Shenzhen Guangdong 518057 (CN); HAN, Zhiqiang, Shenzhen Guangdong 518057 (CN); SUN, Bo, Shenzhen Guangdong 518057 (CN)
(74) Representative: HGF Limited
(86) International application number: PCT/CN2015/092576
(87) International publication number: WO 2016/062263

(57) **Abstract**

Disclosed are a method for transmitting data and a station. The method includes: when there is data to be sent in a station, determining whether there is a station using a channel in a BSS to which the station belongs and an OBSS using virtual channel detection; when determining that there is no station using the channel in the BSS to which the station belongs and there is a station using the channel in the OBSS, starting or resuming a back off procedure for OBSS spatial reuse transmission of the station; and monitoring the channel in the back off procedure for the OBSS spatial reuse transmission according to a fixed first channel detection threshold and a dynamically adjusted second channel detection threshold, transmitting data when the back off procedure for the OBSS spatial reuse transmission ends.

## Description

### Technical Field

The present application relates to, but is not limited to, wireless local area network (WLAN) technologies.

### Background

With the explosive application of WLAN, on one hand, deployment of WLAN is constantly getting dense, and network loads are constantly aggravated accordingly; on the other hand, with the increase of the networks, the situation of overlapping coverage of WLAN are becoming even more serious. Efficiency of WLAN will decrease significantly, and increasing simply speed cannot resolve this problem. Therefore, the IEEE standards organization establishes a related task force to devote to resolve the problem of the efficiency of WLAN. Dynamic channel detection threshold, which is an alternative technology of improving a channel reuse rate and resolving network efficiency, has aroused extensive attention and research.

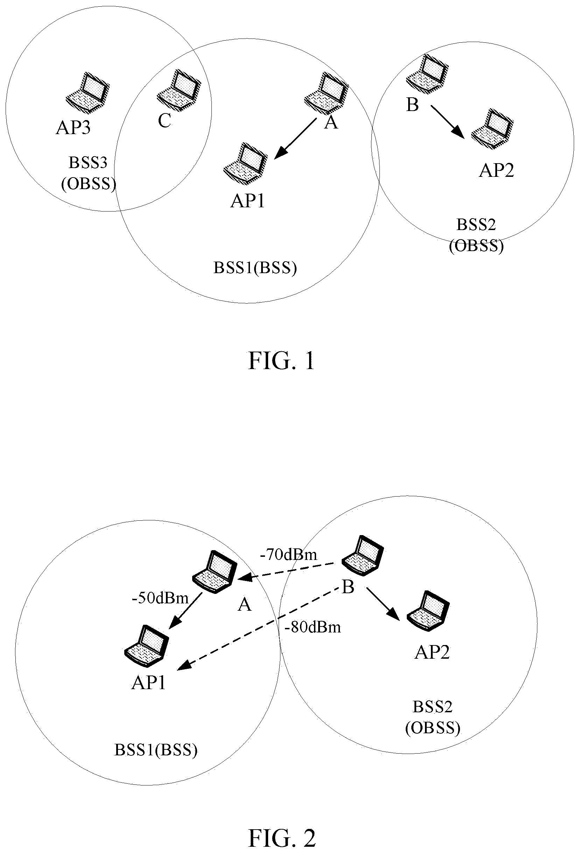

In WLAN, an access point (AP) and multiple non-AP stations (non-AP STAs) associated with the AP constitute a basic service set (BSS). Coverage between multiple BSSs is overlapping (referred to as overlapping SBB (OBSS)), as shown in FIG. 1, which is a schematic diagram of a basic service set of a WLAN in accordance with the existing technology.

At present, 802.11 supports two methods for determining whether a channel is idle, i.e., virtual channel detection and physical channel detection. After both the virtual channel detection and the physical channel detection determine that a channel is idle, an associated station can implement competitive transmission. The physical carrier detection refers to a Clear Channel Assessment (CCA) channel detection technology, i.e., the associated station determines whether the channel is busy or idle by detecting signal strength over a medium and in combination with a CCA threshold. The CCA threshold is usually set fixedly according to receiving sensitivity at the minimum modulation and coding rate to guarantee the maximum receiving coverage. The virtual carrier detection means that a third party associated station other than two communication parties, when receiving a wireless frame of which a receiving address is not its receiving address, a value of a local network allocation vector (NAV) is set according to a value of a Duration field in the wireless frame. The NAV is a counter. When the NAV is not zero, the channel is deemed to be busy and competitive transmission will not be implemented.

In certain scenes, the CCA threshold may be configured in a more flexible manner in order to implement frequency reuse more efficiently. FIG. 2 is a schematic diagram of an embodiment of OBSS transmission spatial reuse in accordance with the existing technology. In the scene as shown in FIG. 2, a solid single headed arrow signifies that a wireless frame is sent to a target receiving station, and a dash single headed arrow signifies that a wireless frame signal reaches a third party station. Although a station A and a station B may send data successfully to their respective APs, respectively, however, when the station A sends a wireless frame to an AP1, because of a more conservative CCA threshold (e.g., -82dBm), the station B monitors a signal strength of the station A being -70dBm, greater than the CCA threshold (-82dBm), and deems that the channel is busy. Thus, it is not possible for the station B to send the wireless frame to an AP2, thereby stopping spatial reuse transmission.

To this end, the industry proposes a way for adjusting dynamically the CCA threshold, for example, adjusting dynamically the CCA threshold according to the signal strength of the AP of the BSS, to which the station belongs, i.e., the present BSS, received by the station, such that the station A and station B can send data to their respective APs simultaneously to implement channel spatial reuse transmission. Such a mechanism for implementing spatial reuse transmission by the way of adjusting dynamically the CCA threshold can improve the efficiency of WLAN effectively in some scenes. However, in the existing technology, only multiple network allocation vectors are utilized to simply guarantee no collision of the transmission, and there is no complete and efficient mechanism to improve reliability of the spatial reuse transmission. Thus, when there are traditional devices in a system, because new devices compete for channels more flexibly and more effectively using a dynamic channel detection threshold and the traditional devices do not have this advantage, there is a fairness problem with the traditional devices.

### Summary

The following is a summary for the subject matter of the detailed description herein. The summary is not intended to limit the protection scope of the claims.

The present text provides a method for transmitting data and a station so as to improve reliability of spatial reuse transmission through a complete and efficient mechanism.

A method for transmitting data includes: when there is data to be sent in a station, determining whether there is a station using a channel in a basic service set (BSS) to which the station belongs and an overlapping BSS (OBSS) using virtual channel detection;
when determining that there is no station using the channel in the BSS to which the station belongs and there is a station using the channel in the OBSS to which the station belongs, starting or resuming a back off procedure for OBSS spatial reuse transmission of the station; and
monitoring the channel in the back off procedure for the OBSS spatial reuse transmission according to a fixed first channel detection threshold and a dynamically adjusted second channel detection threshold, transmitting data when the back off procedure for the OBSS spatial reuse transmission ends.

In an exemplary embodiment, the method further includes: setting up one or more BSS timers and one or more OBSS timers in the station.

In an exemplary embodiment, the method further includes:
the station detecting a preamble signal of an identifiable wireless frame through the fixed first channel detection threshold, receiving the wireless frame, and setting or updating or maintaining a value/values of the BSS timer/timers or the OBSS timer/timers according to BSS identification information and time information of part or whole of the received wireless frame.

In an exemplary embodiment, when the BSS identification information indicates a BSS to which the station receiving the wireless frame belongs, when the BSS timer/timers satisfies/satisfy a preset updating condition, the value/values of the BSS timer/timers is/are updated according to the time information carried in the wireless frame; and

when the BSS identification information indicates an OBSS of the station receiving the wireless frame, when the OBSS timer/timers satisfies/satisfy a preset updating condition, the value/values of the OBSS timer/timers is/are updated according to the time information carried in the wireless frame.

In an exemplary embodiment, when the BSS identification information indicates the OBSS of the station receiving the wireless frame, the method further includes:
detecting whether a physical channel is idle according to the dynamically adjusted second channel detection threshold, and when signal strength of the preamble signal of the received wireless frame is less than the second channel detection threshold, determining that the physical channel is idle.

In an exemplary embodiment, determining whether there is a station using a channel in a BSS to which the station belongs and an OBSS using virtual channel detection includes:
checking the BSS timer/timers, when there is a timer which is not zero in the BSS timer/timers, determining that there is a station using the channel in the BSS to which the station belongs, and keeping monitoring the channel;
when the BSS timer/timers is/are zero, determining that there is no station using the channel in the BSS to which the station belongs; and
checking the OBSS timer/timers, and when there is at least one timer which is greater than zero in the OBSS timer/timers, determining that there is a station using the channel in the OBSS of the station.

In an exemplary embodiment, the BSS timer is a BSS network allocation vector (NAV), or BSS response indication delay (RID) timer, or BSS NAV,s and BSS RID timer; and
the OBSS timer is an OBSS NAV, or OBSS RID timer, or OBSS NAV and BSS RID timer.

In an exemplary embodiment, when the BSS timer is a BSS NAV and the OBBS timer is an OBBS NAV,
the updating condition is to: perform updating when the time information carried in the received wireless frame belonging to the BSS is greater than a value of a current BSS NAV; keep unchanged when the time information carried in the received wireless frame belonging to the BSS is less than or equal to the value of the current BSS NAV; perform updating when the time information carried in the received wireless frame belonging to the OBSS is greater than a value of a current OBSS NAV; and keep unchanged when the time information carried in the received wireless frame belonging to the OBSS is less than or equal to the value of the current OBSS NAV; or
when the BSS timer is a BSS RID timer and the OBBS timer is an OBBS RID timer,
the updating condition is to: update the BSS RID timer/timers when the time information is carried in a physical frame head in the received wireless frame belonging to the present BSS; and update the OBSS RID timer/timers when the time information is carried in the physical frame head in the received wireless frame belonging to the present OBSS.

In an exemplary embodiment, starting or resuming a back off procedure for OBSS spatial reuse transmission of the station includes:
suspending an ongoing first back off procedure before the back off procedure for the OBSS spatial reuse transmission is started; and at the same time, starting or resuming a second back off counter of a second back off procedure for the OBSS spatial reuse transmission.

In an exemplary embodiment, monitoring the channel in the back off procedure for the OBSS spatial reuse transmission according to a fixed first channel detection threshold and a dynamically adjusted second channel detection threshold includes:
the station determining whether the channel is idle according to the first channel detection threshold, decreasing the second back off counter if the channel is idle, and continuing to determine whether the channel is idle according to the first channel detection threshold when the second back off counter is not zero;
when it is determined that the channel is busy according to the first channel detection threshold and part or whole of a new wireless frame is received, determining identification of the wireless frame according to BSS identification information carried in the wireless frame;
when it is determined that the wireless frame belongs to the BSS and that the station itself is not a target receiving station according to address information in the wireless frame, setting or updating or maintaining the BSS timer/timers according to the time information in the wireless frame and ending the second back off procedure;
when it is determined that the wireless frame belongs to the OBSS, setting or updating or maintaining the OBSS timer/timers according to the time information in the wireless frame, determining whether the channel is idle according to the second channel detection threshold, decreasing the second back off counter when the channel is idle, and continuing to determine whether the channel is idle according to the first channel detection threshold when the second back off counter is not zero; suspending the decrement of the second back off counter when it is determined that the channel is busy according to the second channel detection threshold, continuing to monitor the channel according to the first channel detection threshold when currently all of the BSS timer/timers is/are zero and at least one OBSS timer is greater than zero, and ending the second back off procedure and resuming the first back off procedure when currently at least one BSS timer is not zero or all of the OBSS timer/timers is/are zero;
when the second back off counter is decreased to zero, ending the back off procedure for the OBSS spatial reuse transmission when all of the BSS timer/timers is/are zero and at least one OBSS timer is greater than zero, and the station selecting an appropriate frame exchange duration according to a value of a current OBSS timer to start to send the data; and ending the second back off procedure and resuming the first back off procedure when at least one BSS timer is greater than zero or all of the OBSS timer/timers is/are zero.

In an exemplary embodiment, when the station determines that the channel is busy according to the first channel detection threshold and receives the wireless frame successfully but is unable to determine whether the wireless frame belongs to the BSS or the OBSS, the method further includes:
the station setting or updating or maintaining the BSS timer/timers according to the address information and the time information in the wireless frame, ending the second back off procedure and resuming the first back off procedure.

In an exemplary embodiment, after the second back off procedure is ended and the first back off procedure is resumed, the method further includes:
the station resuming decrement of a first back off counter.

In an exemplary embodiment, the method further includes:
when the BSS identification information indicates the BSS to which the station receiving the wireless frame belongs, setting or updating or maintaining the value/values of the BSS timer/timers according to the time information carried in the wireless frame; and
when the BSS identification information indicates the OBSS of the station receiving the wireless frame, according to the signal strength of the preamble signal of the received wireless frame, setting or updating or maintaining the value/values of the BSS timer/timers according to the time information carried in the wireless frame when a preset determination condition is satisfied, and setting or updating or maintaining the value/values of the OBSS timer/timers according to the time information carried in the wireless frame when the preset determination condition is not satisfied.

In an exemplary embodiment, the preset determination condition is that the signal strength is greater than or equal to the second channel detection threshold in a preset duration range.

In an exemplary embodiment, determining whether there is a station using a channel in a BSS to which the station belongs and an OBSS using virtual channel detection includes:
checking the BSS timer/timers, and when there is a timer which is not zero in the BSS timer/timers, determining that there is a station using the channel in the BSS to which the station belongs or OBSS;
when the BSS timer/timers is/are zero, determining that there is no station using the channel in the BSS to which the station belongs; and
checking the OBSS timer/timers, and when there is at least one timer which is greater than zero in the OBSS timer/timers, determining that there is a station using the channel in the OBSS of the station.

In an exemplary embodiment, the BSS timer is a network allocation vector (NAV,) or response indication delay (RID) timer, or NAV and RID timer; and
the OBSS timer is an OBSS spatial reuse transmission timer, wherein the OBSS spatial reuse transmission timer is set, updated and maintained according to time information carried in the received OBSS wireless frame of which the signal strength is lower than the second channel detection threshold.

In an exemplary embodiment, starting or resuming a back off procedure for OBSS spatial reuse transmission of the station includes:
Setting the value/values of the OBSS timer/timers according to the time information carried in the received OBSS wireless frame satisfying an OBSS transmission spatial reuse condition, starting or resuming the back off procedure for the OBSS spatial reuse transmission, and decreasing the second back off counter.

Monitoring the channel in the back off procedure for the OBSS spatial reuse transmission according to a fixed first channel detection threshold and a dynamically adjusted second channel detection threshold includes:
the station performing the back off procedure for the OBSS spatial reuse transmission and monitoring the channel when the value/values the OBSS timer/timers is/are not zero and a current BSS timer/timers is/are zero;
determining whether the channel is idle according to the second channel detection threshold when the station does not detect an efficient preamble signal, setting a channel status for the OBSS spatial reuse transmission "SR CCA" to be idle when the detected signal strength is less than the second channel detection threshold, and setting the channel status for the OBSS spatial reuse transmission "SR_CCA" to be busy when the detected signal strength is greater than or equal to the second channel detection threshold;
determining whether the channel is idle according to the first channel detection threshold when the station detects an efficient preamble signal, setting the channel status for the OBSS spatial reuse transmission "SR_CCA" to be idle when the detected signal strength is less than the first channel detection threshold, and setting the channel status for the OBSS spatial reuse transmission "SR_CCA" to be busy when the detected signal strength is greater than or equal to the first channel detection threshold;
keeping the channel status for the OBSS spatial reuse transmission "SR_CCA" to be busy when the station detects the efficient preamble signal and determines that the received wireless frame is a wireless frame of the BSS to which the station belongs;
keeping the channel status for the OBSS spatial reuse transmission "SR_CCA" to be busy when the station detects the efficient preamble signal and determines that the received wireless frame is a wireless frame of the OBSS and the detected signal strength is greater than or equal to the second channel detection threshold;
setting the channel status for the OBSS spatial reuse transmission "SR_CCA" to be idle when the station detects the efficient preamble signal and determines that the received wireless frame is the wireless frame of the OBSS and the detected signal strength is less than the second channel detection threshold.

In an exemplary embodiment, the back off procedure for the OBSS spatial reuse transmission includes:
the station performing operation of the decrement of the second back off counter in the OBSS spatial reuse transmission back off procedure according to indication of the channel status for the OBSS spatial reuse transmission, decreasing the second back off counter when the channel status for the OBSS spatial reuse transmission "SR_CCA" is indicated to be idle, and continuing the OBSS spatial reuse transmission back off procedure; suspending the decrement of the second back off counter when the channel status for the OBSS spatial reuse transmission "SR_CCA" is indicated to be busy, and suspending the OBSS spatial reuse transmission back off procedure.

In an exemplary embodiment, the back off procedure for the OBSS spatial reuse transmission further includes:
determining that the station itself is not the target receiving station according to the address information in the wireless frame when the station determines that the channel is busy according to the second channel detection threshold and receives part or whole of a new wireless frame, setting or updating or maintaining the BSS timer/timers according to the time information in the wireless frame, and suspending or ending the second back off procedure.

In an exemplary embodiment, ending the back off procedure for the OBSS spatial reuse transmission and starting to send the data includes:
when the second back off counter is decreased to zero, ending the back off procedure for the OBSS spatial reuse transmission when all of the BSS timer/timers are zero and at least one OBSS timer is greater than zero, and the station selecting an appropriate frame exchange duration according to the value of the current OBSS timer to start to send the data.

In an exemplary embodiment, ending the back off procedure for the OBSS spatial reuse transmission further includes: ending the back off procedure for the OBSS spatial reuse transmission when the OBSS timer/timers is/are zero.

A station includes a first detection module, a processing module and a second detection module, wherein
the first detection module is arranged to, when there is data to be sent in the station, send a starting or resuming notification to the processing module when determine that there is no station using a channel in a basic service set (BSS) to which the station belongs using virtual channel detection and determining that there is a station using the channel in an overlapping BSS (OBSS) of the station using the virtual channel detection;
the processing module is arranged to receive the starting or resuming notification from the first detection module, start or resume a back off procedure for OBSS spatial reuse transmission of the station, and notify the second detection module to monitor a channel in the back off procedure for the OBSS spatial reuse transmission, transmit data when it is determined according to a monitoring result from the second detection module that the back off procedure for the OBSS spatial reuse transmission ends; and
the second detection module is arranged to receive the notification from the processing module, monitor the channel in the back off procedure for the OBSS spatial reuse transmission according to a fixed first channel detection threshold and a dynamically adjusted second channel detection threshold, and send the monitoring result to the processing module.

In an exemplary embodiment, the processing module is arranged to detect a preamble signal of an identifiable wireless frame through the fixed first channel detection threshold, receive the wireless frame, and set or update or maintain a value of a BSS timer or an OBSS timer according to BSS identification information and time information of part or whole of the received wireless frame.

In an exemplary embodiment, the processing module is arranged to:
when the BSS identification information indicates a BSS to which the station receiving the wireless frame belongs, when the BSS timer satisfies a preset updating condition, update the value of the BSS timer according to the time information carried in the wireless frame; and
when the BSS identification information indicates an OBSS of the station receiving the wireless frame, when the OBSS timer satisfies a preset updating condition, update the value of the OBSS timer according to the time information carried in the wireless frame.

In an exemplary embodiment, the processing module is arranged to:
suspend an ongoing first back off procedure before the back off procedure for the OBSS spatial reuse transmission is started, at the same time, start or resume a second back off counter in the OBSS spatial reuse transmission, notify the second detection module to monitor the channel, decrease the second back off counter when the monitoring result from the second detection module is that the channel is idle; and notify the second detection module to determine whether the channel is idle according to the first channel detection threshold when the second back off counter is not zero;
when the monitoring result from the second detection module is that the channel is busy and it is determined that the wireless frame belongs to the BSS, end the second back off procedure;
notify the second detection module to determine whether the channel is idle according to the second channel detection threshold when the monitoring result from the second detection module is that the channel is busy and it is determined that the wireless frame belongs to the OBSS, decrease the second back off counter when the monitoring result from the second detection module is that the channel is idle, and notify the second detection module to determine whether the channel is idle according to the first channel detection threshold if the second back off counter is not zero;
suspend the decrement of the second back off counter when the monitoring result from the second detection module is that the channel is busy, and notify the second detection module to monitor the channel according to the first channel detection threshold if all of the BSS timer/timers is/are zero and at least one OBSS timer is greater than zero; and
end the second back off procedure when the second back off counter is zero, and select an appropriate frame exchange duration according to the value of the current OBSS timer to start to send the data when all of the BSS timer/timers is/are zero and at least one OBSS timer is greater than zero.

In an exemplary embodiment, after the second back off procedure is ended and the first back off procedure is resumed, the processing module is further arranged to resume the decrement of the first back off counter.

In an exemplary embodiment, the processing module is arranged to:
when the BSS identification information indicates the BSS to which the station receiving the wireless frame belongs, set or update or maintain the value/values of the BSS timer/timers according to the time information carried in the wireless frame; and
when the BSS identification information indicates the OBSS of the station receiving the wireless frame, according to the signal strength of the preamble signal of the received wireless frame, set or update or maintain the value/values of the BSS timer/timers according to the time information carried in the wireless frame if a preset determination condition is satisfied, and set or update or maintain the value/values of the OBSS timer/timers according to the time information carried in the wireless frame if the preset determination condition is not satisfied.

In an exemplary embodiment, the preset determination condition is that the signal strength in a preset duration range is greater than or equal to the second channel detection threshold.

In an exemplary embodiment, the first detection module is arranged to:
check the BSS timer/timers, when there is a timer which is not zero in the BSS timer/timers, determine that there is a station using the channel in the BSS to which the station belongs or the OBSS;
when the BSS timer/timers is/are zero, determine that there is no station using the channel in the BSS to which the station belongs; and
check the OBSS timer/timers, when there is at least one timer which is greater than zero in the OBSS timer/timers, and determine that there is a station using the channel in the OBSS of the station.

In an exemplary embodiment, the BSS timer is a network allocation vector (NAV), or response indication delay (RID) timer, or NAV and RID timer; and the OBSS timer is an OBSS spatial reuse transmission timer.

A computer readable storage medium has stored computer executable instructions therein for performing the method described above.

Compared with the existing technology, the technical scheme of the present invention includes: when there is data to be sent in a station, determining whether there is a station using a channel in a BSS to which the station belongs using virtual channel detection; when there is no station using the channel in the BSS to which the station belongs, starting or resuming a back off procedure for OBSS spatial reuse transmission of the BSS to which the station belongs; and monitoring the back off procedure for the OBSS spatial reuse transmission according to a fixed first channel detection threshold and a dynamically adjusted second channel detection threshold, transmitting data when the back off procedure for the OBSS spatial reuse transmission ends. The technical scheme provided by the embodiments of the present invention utilizes the timers to record transmission time of frame switching of the station in the BSS and improves the reliability of spatial reuse transmission through a complete and efficient mechanism. On one hand, the ongoing transmission of the BSS will be ensured to be undisturbed while the opportunity of frequency reuse is improved, and on the other hand, fairness of competition for all of the stations in the back off procedure after the transmission spatial reuse is started is guaranteed.

After the accompanied drawings and detailed description are read and understood, other aspects may be clear.

### Brief Description of the Drawings

FIG. 1 is a schematic diagram of a WLAN basic service set in accordance with the existing technology.
FIG. 2 is a schematic diagram of an embodiment of OBSS transmission spatial reuse in accordance with the existing technology.
FIG. 3 is a flow chart of a method for transmitting data in accordance with an embodiment of the present invention.
FIG. 4 is a flow chart of an embodiment of a method for transmitting data in accordance with the present invention.
FIG. 5 is a block diagram of a station in accordance with an embodiment of the present invention.
FIG. 6 is a schematic diagram of the first to fourth embodiments of a method for transmitting data in accordance with the present invention.
FIG. 7 is the fifth embodiment of a method for transmitting data in accordance with the present invention.
FIG. 8 is the sixth embodiment of a method for transmitting data in accordance with the present invention.
FIG. 9 is the seventh embodiment of a method for transmitting data in accordance with the present invention.
FIG. 10 is the eighth embodiment of a method for transmitting data in accordance with the present invention.
FIG. 11 is the ninth embodiment of a method for transmitting data in accordance with the present invention.

### Detailed Description

The implementation mode of the present invention will be described in detail below in conjunction with the accompanying drawings. It should be noted that embodiments of the present application and features in the embodiments can be combined with each other arbitrarily without conflict.

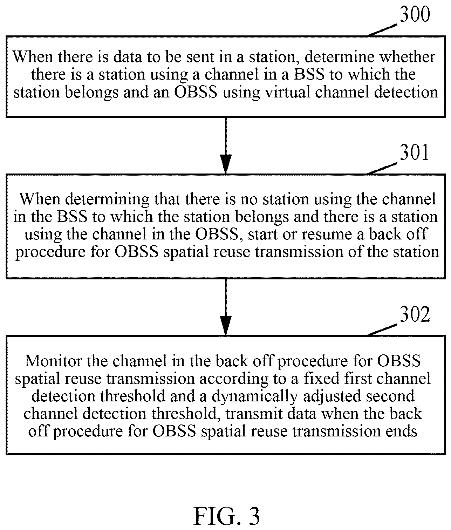

FIG. 3 is a flow chart of a method for transmitting data in accordance with an embodiment of the present invention, which, as shown in FIG. 3, includes the following steps.

In Step 300, when there is data to be sent in a station, it is to determine whether there is a station using a channel in a BSS to which the station belongs and an OBSS using virtual channel detection.

In the station, one or more BSS timers and one or more OBSS timers are pre-set.

For example, the BSS timer may be BSS network allocation vector, called BSS NAV for short, or may be BSS response indication delay timer, called BSS RID timer for short, or may be BSS NAV and BSS RID timer, etc.

The OBSS timer may be OBSS network allocation vector, called OBSS NAV for short, or may be OBSS response indication delay timer, called OBSS RID timer for short, or may be OBSS NAV and OBSS RID timer, etc.

Determining whether there is a station using the channel in a BSS to which the station belongs using the virtual channel detection in this step includes: checking the BSS timer, for example, checking the BSS NAV or the BSS RID timer or the BSS NAV and BSS RID timer, when there is a timer which is not zero in the BSS timer/timers, determining that there is a station using the channel in the BSS to which the station belongs and the virtual channel detection may set a channel status to be busy, and keeping monitoring the channel; when the BSS timer/timers is/are zero, i.e., all of the BSS timer/timers is/are zero, it is to determine that there is no station using the channel in the BSS to which the station belongs.

Determining whether there is a station using a channel in the OBSS of the station using the virtual channel detection in this step includes: checking the OBSS timer, for example, checking the OBSS NAV or the OBSS RID timer or the OBSS NAV and OBSS RID timer, when there is a timer which is not zero in the OBSS timer/timers, determining that there is a station using the channel in the OBSS of the station. Before this step, the method further includes: the station detecting a preamble signal of an identifiable wireless frame through the fixed first channel detection threshold, then beginning to receive the wireless frame, and setting or updating or maintaining a value of the BSS timer or the OBSS timer according to BSS identification information and time information of part or whole of the received wireless frame. The BSS identification information includes at least one of the following: COLOR bit, part of BSS identification information, MAC sending address information, MAC receiving address information, MAC BSS identification information, and from/to DS indication information.

The first channel detection threshold is a CCA threshold, which is usually set fixedly according to a receiving sensitivity at the minimum modulation and coding rate.

Setting or updating or maintaining the value of the BSS timer or OBSS timer includes:
when the BSS identification information indicates a BSS to which the station receiving the wireless frame belongs, if the BSS timer of the station satisfies a preset updating condition, updating the value of the BSS timer according to the time information carried in the wireless frame; and when the BSS identification information indicates an OBSS of the station receiving the wireless frame, if the OBSS timer of the station satisfies a preset updating condition, updating the value of the OBSS timer according to the time information carried in the wireless frame.

The updating condition is to: when the BSS timer is the BSS NAV and the OBSS timer is the OBSS NAV, perform updating when the time information carried in an MAC frame head in the received wireless frame belonging to the BSS/OBSS is greater than the value of the current BSS NAV/OBSS NAV, keep unchanged when the time information is less than or equal to the value of the current BSS NAV/OBSS NAV; or the updating condition may also be to: when the BSS timer is the BSS RID timer and the OBSS timer is the OBSS RID timer, perform updating when the time information is carried in a physical frame head in the received wireless frame belonging to the present BSS/OBSS.

When the BSS identification information indicates the OBSS of the station receiving the wireless frame, the method further includes: determining whether the channel is idle according to the dynamically adjusted second channel detection threshold, and determining that the physical channel is idle when the signal strength of the preamble signal of the received wireless frame is less than the second channel detection threshold.

When the BSS timer or the OBSS timer is set for the first time, the value of the BSS timer or the OBSS timer may be set according to the time information carried in the wireless frame; when the value of the BSS timer or the OBSS timer is consistent with the time information carried in the wireless frame, the value of the BSS timer or the OBSS timer is kept unchanged.

In another embodiment of the present invention, the BSS timer may be a network allocation vector (NAV) or response indication delay (RID) timer or NAV and RID timer; and the OBSS timer may be OBSS spatial reuse transmission timer, i.e., OBSS transmission spatial reuse duration, herein the OBSS spatial reuse transmission timer is set, updated and maintained according to the time information carried in the received OBSS wireless frame of which the signal strength is lower than the second channel detection threshold.

Before the step 300, the method further includes: when the BSS identification information indicates the BSS to which the station receiving the wireless frame belongs, setting or updating or maintaining the value of the BSS timer according to the time information carried in the wireless frame; and
when the BSS identification information indicates the OBSS of the station receiving the wireless frame, according to the signal strength of the preamble signal of the received wireless frame, setting or updating or maintaining the value of the BSS timer according to the time information carried in the wireless frame if a preset determination condition is satisfied, and setting or updating or maintaining the value of the OBSS timer according to the time information carried in the wireless frame if the preset determination condition is not satisfied.

The preset determination condition may be that the signal strength in a preset duration range is greater than or equal to the second channel detection threshold.

In this step, whether there is a station using the channel in the BSS to which the station belongs and the OBSS is determined using the virtual channel detection in the following way:
checking the BSS timer/timers, and when there is a timer which is not zero in the BSS timer/timers, determining that there is a station using the channel in the BSS to which the station belongs or OBSS;
when the BSS timer/timers is/are zero, determining that there is no station using the channel in the BSS to which the station belongs; and
checking the OBSS timer/timers, and when there is at least one timer which is greater than zero in the OBSS timer/timers, determining that there is a station using the channel in the OBSS of the station.

In Step 301, when determining that there is no station using the channel in the BSS to which the station belongs and there is a station using the channel in the OBSS, a back off procedure for OBSS spatial reuse transmission of the station is started or resumed. This step includes: suspending an ongoing back off procedure before the back off procedure for the OBSS spatial reuse transmission is started, also called a first back off procedure; and at the same time, starting the back off procedure for the OBSS spatial reuse transmission, also called a second back off procedure or an OBSS spatial reuse transmission process, i.e., the station starts or resumes an OBSS spatial reuse transmission back off counter, also called a second back off counter. In another embodiment of the present invention, the step 301 may include: setting the value of the OBSS timer according to the time information carried in the received OBSS wireless frame satisfying an OBSS transmission spatial reuse condition, starting or resuming the back off procedure for the OBSS spatial reuse transmission, and decreasing the second back off counter.

In Step 302, the channel is monitored in the back off procedure for the OBSS spatial reuse transmission according to a fixed first channel detection threshold and a dynamically adjusted second channel detection threshold, and the data starts to be transmitted when the back off procedure for the OBSS spatial reuse transmission ends.

In this step, monitoring the channel in the back off procedure for the OBSS spatial reuse transmission includes:
the station determining whether the channel is idle according to the first channel detection threshold, decreasing the second back off counter if the channel is idle, and continuing to determine whether the channel is idle according to the first channel detection threshold if the second back off counter is not zero;
if it is determined that the channel is busy according to the first channel detection threshold and part or whole of a new wireless frame is received, determining whether BSS identification information carried in the wireless frame is OBSS; and
if it is determined that the wireless frame belongs to the BSS and that the station itself is not a target receiving station according to address information in the wireless frame, setting or updating or maintaining the BSS timer according to the time information in the wireless frame, ending the back off procedure, i.e., the second back off procedure of the station, for the OBSS spatial reuse transmission, started or resumed in the step 301, and resuming the ongoing back off procedure, i.e., the first back off procedure, before the back off procedure for the OBSS spatial reuse transmission is started, which is suspended in the step 301;
if it is determined that the wireless frame belongs to the OBSS, setting or updating or maintaining the OBSS timer according to the time information in the wireless frame, determining whether the channel is idle according to the second channel detection threshold, decreasing the second back off counter if the channel is idle, and continuing to determine whether the channel is idle according to the first channel detection threshold if the second back off counter is not zero; suspending the decrement of the second back off counter if it is determined that the channel is busy according to the second channel detection threshold, and continuing to monitor the channel according to the first channel detection threshold if currently all of the BSS timer/timers is/are zero and at least one OBSS timer is greater than zero, otherwise, ending the second back off procedure and resuming the first back off procedure.

When the second back off counter is decreased to zero, the back off procedure for the OBSS spatial reuse transmission is ended, and whether all of the BSS timer/timers is/are zero and at least one OBSS timer is greater than zero is determined, if all of the BSS timer/timers is/are zero and at least one OBSS timer is greater than zero, then the station selects an appropriate frame exchange duration according to the value of the current OBSS timer to start to send the data; and the second back off procedure is ended and the first back off procedure is resumed if at least one BSS timer is greater than zero or all of the OBSS timer/timers is/are zero.

The second channel detection threshold is adjusted dynamically, for example, adjusted dynamically according to the signal strength of the AP of the BSS, to which the station belongs, i.e., the present BSS, received by the station, and may be calculated based on received signal strength indicator (RSSI) of a beacon frame of the AP received by the station and a preset margin, such as received signal strength indicator-margin (RSSI-Margin), or is obtained through other information and ways.

Determining whether the channel is idle according to the first channel detection threshold or the second channel detection threshold includes: if energy of the preamble signal is lower than the first channel detection threshold or the second channel detection threshold, determining that the channel is idle and setting the channel status to be idle.

In this step, if the station determines that the channel is busy according to the first channel detection threshold and receives the wireless frame successfully but is unable to determine the BSS identification information, the method further includes:
the station setting or updating or maintaining the BSS timer according to the time information in the wireless frame, ending the back off procedure, i.e., the second back off procedure, in the OBSS spatial reuse transmission of the station, which is started or resumed in the step 301, and resuming the ongoing back off procedure, i.e., the first back off procedure, before the back off procedure for the OBSS spatial reuse transmission is started, which is suspended in the step 301.

After the second back off procedure is ended and the first back off procedure is resumed, the method further includes the station resuming the decrement of the first back off counter, including:
determining whether the channel is idle according to the first channel detection threshold, decreasing the first back off counter if the channel is idle, and continuing to determine whether the channel is idle according to the first channel detection threshold if the first back off counter is not zero;
if it is determined that the channel is busy according to the first channel detection threshold and part or whole of a new wireless frame is received, determining whether the identification information carried in the wireless frame is the OBSS;
if it is determined that the wireless frame belongs to the BSS, setting or updating or maintaining the BSS timer according to the time information in the wireless frame, suspending the decrement of the first back off counter and receiving the wireless frame, and after an indicator for a busy channel is reset, i.e., the channel is idle, continuing to determine whether the channel is idle according to the first channel detection threshold if the first back off counter is not zero;
if it is determined that the wireless frame belongs to the OBSS, setting or updating or maintaining the OBSS timer according to the address information and the time information in the wireless frame, determining whether the channel is idle according to the second channel detection threshold; and
when the first back off counter is decreased to zero, ending the back off procedure and the station starting to send the data.

In the processing of ending the second back off procedure and resuming the first back off procedure, the second back off procedure of the OBSS spatial reuse transmission is started or resumed if all of the BSS timer/timers is/are zero and at least one OBSS timer is greater than zero.

In a further embodiment of the present invention, the step 302 may include:
the station performing the back off procedure of the OBSS spatial reuse transmission and monitoring the channel when the value the OBSS timer is not zero and the current BSS timer is zero;
determining whether the channel is idle according to the second channel detection threshold if the station does not detect an efficient preamble signal, setting a channel status for the OBSS spatial reuse transmission "SR_CCA" to be idle when the detected signal strength is less than the second channel detection threshold, decreasing the second back off counter, and continuing the second back off procedure if the second back off counter is not zero; and setting the channel status for the OBSS spatial reuse transmission "SR_CCA" to be busy when the detected signal strength is greater than or equal to the second channel detection threshold, and suspending the decrement of the second back off counter, i.e., suspending the second back off procedure;
determining whether the channel is idle according to the first channel detection threshold if the station detects an efficient preamble signal, setting the channel status for the OBSS spatial reuse transmission "SR_CCA" to be idle when the detected signal strength is less than the first channel detection threshold, decreasing the second back off counter, and continuing the second back off procedure if the second back off counter is not zero; and setting the channel status for the OBSS spatial reuse transmission "SR_CCA" to be busy when the detected signal strength is greater than or equal to the first channel detection threshold, and suspending the decrement of the second back off counter, i.e., suspending the second back off procedure;
keeping the channel status for the OBSS spatial reuse transmission "SR_CCA" to be busy if the station detects the efficient preamble signal and determines that the received wireless frame is a wireless frame of the present BSS according to the BSS identification information carried in the wireless frame, and suspending the decrement of the second back off counter, i.e., suspending the second back off procedure; and
keeping the channel status for the OBSS spatial reuse transmission "SR_CCA" to be busy if the station detects the efficient preamble signal and determines that the received wireless frame is a wireless frame of the OBSS according to the BSS identification information carried in the wireless frame and the detected signal strength is greater than or equal to the second channel detection threshold, and suspending the decrement of the second back off counter, i.e., suspending the second back off procedure; and setting the channel status for the OBSS spatial reuse transmission "SR_CCA" to be idle if the detected signal strength is less than the second channel detection threshold, decreasing the second back off counter, and continuing to perform the second back off procedure if the second back off counter is not zero.

When the second back off counter is decreased to zero, the back off procedure for the OBSS spatial reuse transmission is ended if all of the BSS timers are zero and at least one OBSS timer is greater than zero, and the station selects an appropriate frame exchange duration according to the value of the current OBSS timer to start to send the data.

When the OBSS timer is zero, the back off procedure for the OBSS spatial reuse transmission is ended and the second back off counter is cleared.

The technical scheme provided by the embodiments of the present invention utilizes the timers to record transmission time of frame switching of the station in the BSS and improves the reliability of spatial reuse transmission through a complete and efficient mechanism. On one hand, the ongoing transmission of the BSS will be ensured to be undisturbed while the opportunity of frequency reuse is improved, and on the other hand, fairness of competition for all of the stations in the back off procedure after the transmission spatial reuse is started is guaranteed.

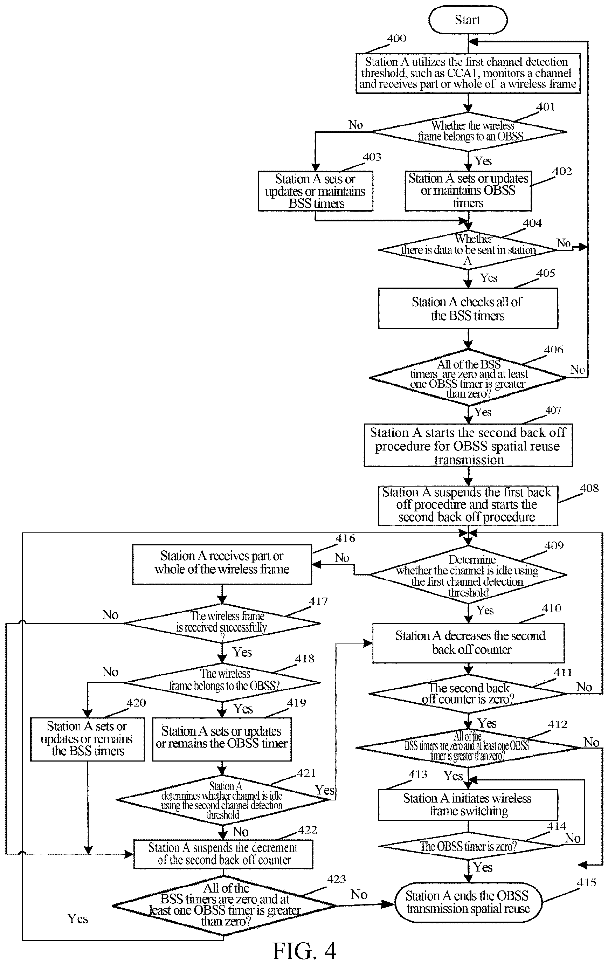

FIG. 4 is a flow chart of an embodiment of a method for transmitting data in accordance with the present invention. As shown in FIG. 4, in the embodiment, assuming that a station A belongs to a BSS and is preset with a BSS NAV and an OBSS NAV, the method includes the following steps.

In Step 400, the station A utilizes a first channel detection threshold, such as CCA1, monitors a channel and receives part or whole of a wireless frame.

In Step 401, the station A determines whether the received wireless frame belongs to an OBSS, and the process proceeds to step 402 if it belongs to the OBSS, and the process proceeds to step 403 if it belongs to the BSS.

In Step 402, the station A sets or updates or maintains OBSS timers according to time information in the received wireless frame and then the process proceeds to step 404.

In Step 403, the station A sets or updates or maintains BSS timers according to the time information in the received wireless frame.

In Step 404, it is determined whether there is data to be sent in the station A, and if yes, the process proceeds to step 405, and if not, the process returns to step 400, and proceeds to step 405 when there is the data to be sent.

In Step 405-step 406, the station A checks all of the BSS timers and the OBSS timers, i.e., checks the BSS NAVs and the OBSS NAVs in the embodiment, and if the BSS NAVs are zero and an OBSS NAV is not zero, then the process proceeds to step 407; otherwise the process returns to step 400.

In Step 407-step 408, the station A starts or resumes a second back off procedure of the OBSS spatial reuse transmission, and the station A suspends a first back off procedure, starts the second back off procedure and sets a second back off counter.

In Step 409, the station A determines whether the channel is idle using the first channel detection threshold, such as CCA1, and if the channel is idle currently, the process proceeds to step 410; otherwise, the process proceeds to step 416.

In Step 410, the station A decreases the second back off counter.

In Step 411, it is determined whether the second back off counter is zero, and if it is zero, the process proceeds to step 412, otherwise, the process returns to step 409.

In Step 412, it is determined whether the BSS timers, i.e., the BSS NAVs are zero, and if the BSS timers are zero and at least one OBSS timer is greater than zero, the process proceeds to step 413; otherwise the process proceeds to step 415. The determination may be not made here, i.e., this step may be omitted.

In Step 413, the station A initiates wireless frame switching, i.e., an appropriate frame exchange duration is selected according to the value of the current OBSS timer and then the data starts to be sent.

In Step 414, it is determined whether the OBSS timer is zero, and if it is zero, the process proceeds to step 415; otherwise the process returns to step 413.

In Step 415, the station A ends the OBSS transmission spatial reuse. The process ends.

In Step 416-step 417, the station A receives part or whole of the wireless frame, and determines whether the wireless frame is received successfully, and it is received successfully, the process proceeds to step 418; otherwise, the process proceeds to step 422.

In Step 418, it is determined whether the received wireless frame belongs to the OBSS, and if it belongs to the OBSS, the process proceeds to step 419; otherwise, the process proceeds to step 420.

In Step 419, the station A sets or updates or remains the OBSS timer according to the time information in the received wireless frame, and then the process proceeds to step 421.

In Step 420, the station A sets or updates or remains the BSS timers according to the time information in the received wireless frame, and then the process proceeds to step 422.

In Step 421, the station A determines whether the channel is idle using a second channel detection threshold, such as CCA2, and if the current channel is idle, the process returns to step 410; otherwise, the process proceeds to step 422.

In Step 422, the station A suspends the decrement of the second back off counter.

In Step 423, if it is determined that all of the BSS timers are zero and at least one OBSS timer is greater than zero, the process returns to step 409; otherwise, the process proceeds to step 415.

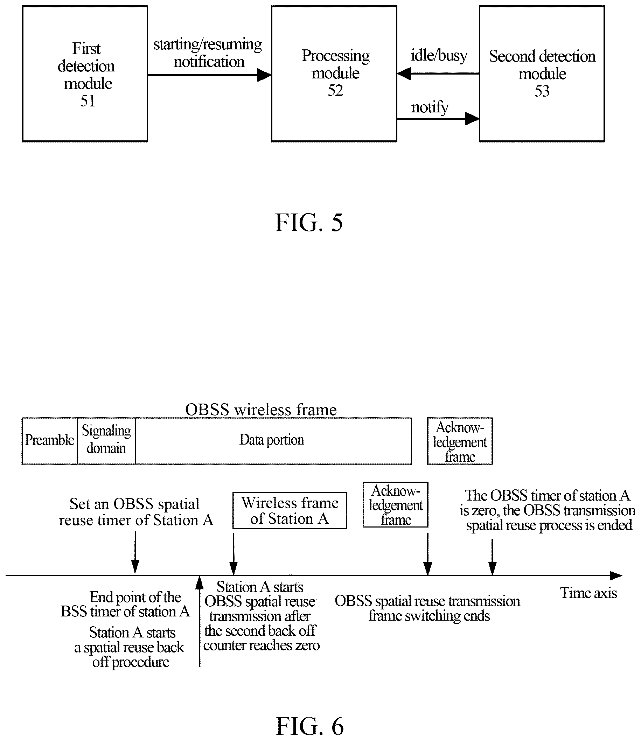

FIG. 5 is a block diagram of a station in accordance with an embodiment of the present invention, which, as shown in FIG. 5, including a first detection module 51, a processing module 52 and a second detection module 53, wherein
the first detection module 51 is arranged to, when there is data to be sent in the station, send a starting or resuming notification to the processing module 52 when determining that there is no station using a channel in a BSS to which the station belongs using virtual channel detection and determining that there is a station using the channel in an OBSS of the station using the virtual channel detection;
the processing module 52 is arranged to receive the starting or resuming notification from the first detection module 51, start or resume a back off procedure for OBSS spatial reuse transmission of the station, and notify the second detection module 53 to monitor a channel in the back off procedure for the OBSS spatial reuse transmission, transmit data when it is determined according to a monitoring result from the second detection module 53 that the back off procedure for the OBSS spatial reuse transmission ends; and
the second detection module 53 is arranged to receive the notification from the processing module 52, monitor the channel in the back off procedure for the OBSS spatial reuse transmission according to a fixed first channel detection threshold and a dynamically adjusted second channel detection threshold, and send the monitoring result to the processing module 52.

In an embodiment, the processing module 52 is further arranged to detect a preamble signal of an identifiable wireless frame through the fixed first channel detection threshold, begin to receive the wireless frame, and set or update or maintain a value of a BSS timer or OBSS timer according to BSS identification information and time information of part or whole of the received wireless frame.

In one embodiment of the present invention, the processing module 52 is arranged to:
when the BSS identification information indicates a BSS to which the station receiving the wireless frame belongs, if the BSS timer satisfies a preset updating condition, update the value of the BSS timer according to the time information carried in the wireless frame; and when the BSS identification information indicates an OBSS of the station receiving the wireless frame, if the OBSS timer satisfies a preset updating condition, update the value of the OBSS timer according to the time information carried in the wireless frame.

The BSS timer is a BSS NAV, or BSS RID timer, or BSS NAV and BSS RID timer.

The OBSS timer is an OBSS NAV, or OBSS RID timer, or OBSS NAV and BSS RID timer.

The first detection module 51 is arranged to:
check the BSS timer/timers, when there is a timer which is not zero in the BSS timer/timers, determine that there is a station using the channel in the BSS to which the station belongs;
when the BSS timer/timers is/are zero, determine that there is no station using the channel in the BSS to which the station belongs; and
check the OBSS timer/timers, when there is at least one timer which is greater than zero in the OBSS timer/timers, determine that there is a station using the channel in the OBSS of the station.

In one embodiment of the present invention, the processing module 52 is arranged to:
suspend an ongoing back off procedure before the back off procedure for the OBSS spatial reuse transmission is started, also called a first back off procedure; at the same time, start or resume a back off counter in the OBSS spatial reuse transmission, also called a second back off counter; notify the second detection module 53 to monitor the channel according to the fixed first channel detection threshold, decrease the second back off counter if the monitoring result from the second detection module 53 is that the channel is idle; and notify the second detection module 53 to monitor the channel according to the fixed first channel detection threshold if the second back off counter is not zero;
when the monitoring result from the second detection module 53 is that the channel is busy and it is determined that the wireless frame belongs to the BSS, end the second back off procedure and resume the first back off procedure;
when the monitoring result from the second detection module 53 is that the channel is busy and it is determined that the wireless frame belongs to the OBSS, notify the second detection module 53 to monitor the channel according to the second channel detection threshold, decrease the second back off counter when the monitoring result from the second detection module 53 is that the channel is idle, and notify the second detection module 53 to monitor the channel according to the fixed first channel detection threshold if the second back off counter is not zero;
suspend the decrement of the second back off counter when the monitoring result from the second detection module 53 is that the channel is busy, and notify the second detection module 53 to monitor the channel according to the fixed first channel detection threshold if all of the BSS timer/timers of the station is/are zero and at least one OBSS timer is greater than zero; and
end the second back off procedure when the second back off counter is zero, and select an appropriate frame exchange duration according to the value of the current OBSS timer to start to send the data when all of the BSS timer/timers of the station is/are zero and at least one OBSS timer is greater than zero.

After the second back off procedure is ended and the first back off procedure is resumed, the processing module 52 is further arranged to resume the decrement of the first back off counter, including:
notify the second detection module 53 to monitor the channel according to the fixed first channel detection threshold, decrease the first back off counter when the monitoring result from the second detection module 53 is that the channel is busy, and notify the second detection module 53 to monitor the channel according to the fixed first channel detection threshold if the first back off counter is not zero;
suspend the decrement of the first back off counter and receive the wireless frame when the monitoring result from the second detection module 53 is that the channel is busy and it is determined that the wireless frame belongs to the BSS, and after an indication of a busy channel is reset, i.e., the channel is idle, notify the second detection module 53 to monitor the channel according to the fixed first channel detection threshold if the first back off counter is not zero; and
when the first back off counter is decreased to zero, end the first back off procedure. The station starts to send the data.

In the processing of ending the second back off procedure and resuming the first back off procedure, if all of the BSS timer/timers is/are zero and at least one OBSS timer is greater than zero, the processing module 52 is arranged to start or resume the second back off procedure of the OBSS spatial reuse transmission.

In another embodiment of the present invention, the processing module 52 is arranged to:
when the BSS identification information indicates the BSS to which the station receiving the wireless frame belongs, set or update or maintain the value of the BSS timer according to the time information carried in the wireless frame; and
when the BSS identification information indicates the OBSS of the station receiving the wireless frame, according to the signal strength of the preamble signal of the received wireless frame, set or update or maintain the value of the BSS timer according to the time information carried in the wireless frame if a preset determination condition is satisfied, and set or update or maintain the value of the OBSS timer according to the time information carried in the wireless frame if the preset determination condition is not satisfied.

In an embodiment, the preset determination condition is that the signal strength is greater than or equal to the second channel detection threshold in a preset duration range.

The first detection module 51 is arranged to:
check the BSS timer/timers, when there is a timer which is not zero in the BSS timer/timers, and determine that there is a station using the channel in the BSS to which the station belongs or OBSS;
when the BSS timer/timers is/are zero, determine that there is no station using the channel in the BSS to which the station belongs; and
check the OBSS timer/timers, when there is at least one timer which is greater than zero in the OBSS timer/timers, and determine that there is a station using the channel in the OBSS of the station.

The BSS timer is a network allocation vector (NAV), or response indication delay (RID) timer, or NAV and RID timer; and the OBSS timer is an OBSS spatial reuse transmission timer.

The OBSS spatial reuse transmission process of the embodiments of the present invention will be described in detail in conjunction with several embodiments.

The first embodiment is used for describing how to initiate the second back off procedure of OBSS transmission spatial reuse. FIG. 6 is a schematic diagram of the first embodiment of a method for transmitting data in accordance with the present invention. As shown in FIG. 6, assuming that the station A is provided locally with two timers, one is a BSS timer, or called BSS NAV, and the other is an OBSS timer, or called OBSS NAV.

The station A receives a wireless frame, determines whether the received wireless frame is an OBSS wireless frame according to BSS identification information in an MAC frame head, such as target address, sending address, BSS address, to DS/from DS information, at the same time, obtains Duration information in the MAC frame head.

If the currently received wireless frame is a BSS wireless frame, and assuming that its receiving target address is an address which is not that of the station A, and when the value of Duration is greater than the current BSS NAV, the BSS NAV is updated using the value of Duration; if the currently received wireless frame is an OBSS wireless frame, and when the value of Duration is greater than the current OBSS NAV, the OBSS NAV is updated using the value of Duration.

When there is data to be sent in the station A, virtual channel detection is performed first, i.e., the BSS NAV is checked. When the BSS NAV is not zero, it is deemed that the channel is busy and the channel status is set to be busy, and the monitoring is kept; when the BSS NAV of the station A is zero and the OBSS NAV is greater than zero, the currently ongoing first back off procedure is suspended, herein the first back off procedure is a process of performing back off according to a fixed channel detection threshold specified by the system.

Meanwhile, a new second back off procedure called an OBSS spatial reuse transmission back off procedure, i.e., a process of performing back off according to fixed and dynamic channel detection thresholds, is started and resumed. The dynamic channel threshold may be varied dynamically according to signal strength of a system beacon frame received by the station A or varied dynamically according to other rules.

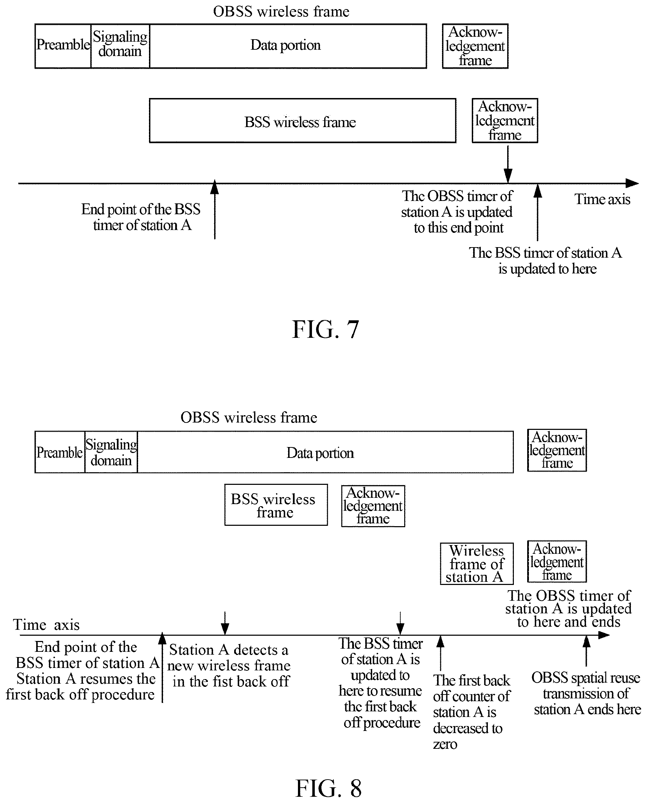

The second embodiment is used for describing how to initiate the second back off procedure of OBSS transmission spatial reuse. As shown in FIG. 7, assuming that the station A is provided locally with two timers, one is a BSS timer, or called BSS RID counter, and the other is an OBSS timer, or called OBSS RID counter.

The station A receives a wireless frame, obtains BSS identification information in a physical frame head signal domain, such as COLOR bit and/or partial BSS identification information (BSSID), and determines whether the wireless frame is a wireless frame transmitted by the BSS or a wireless frame transmitted by the OBSS, meanwhile, updates the BSS RID counter or the OBSS RID counter through wireless frame length information and/or response indication delay information in the physical frame head signaling domain.

When there is data to be sent in the station A, virtual channel detection is performed first, i.e., the BSS RID counter is checked. When the BSS RID counter is not zero, it is deemed that the channel is busy and the channel status is set to be busy, and the monitoring is kept; when the BSS RID counter of the station A is zero and the OBSS RID counter is greater than zero, the currently ongoing first back off procedure. i.e., a process of performing back off according to a fixed channel detection threshold specified by the system, is suspended.

Meanwhile, a new second back off procedure called an OBSS spatial reuse transmission back off procedure, i.e., a process of performing back off according to fixed and dynamic channel detection thresholds, is started and resumed.

The third embodiment is used for describing how to initiate the second back off procedure of OBSS transmission spatial reuse. As shown in FIG. 6, assuming that the station A is provided locally with a BSS timer and an OBSS timer, wherein the BSS timer includes two sub-timers, a BSS NAV and a BSS RID counter respectively; and the OBSS timer includes two sub-timers, an OBSS NAV and an OBSS RID counter respectively. The timers described above are updated respectively according to the method described according to the first embodiment and the second embodiment.

When there is data to be sent in the station A, virtual channel detection is performed first, i.e., the timers described above are checked. When the BSS NAV or the BSS RID counter is not zero, it is deemed that the channel is busy and the channel status is set to be busy, and the monitoring is kept; when both the BSS NAV and the BSS RID counter are zero and at least one of the BSS NAV and BSS RID counter is greater than zero, the currently ongoing first back off procedure. i.e., a process of performing back off according to a fixed channel detection threshold specified by the system, is suspended.

Meanwhile, a new second back off procedure called an OBSS spatial reuse transmission back off procedure, i.e., a process of performing back off according to fixed and dynamic channel detection thresholds, is started and resumed.

The fourth embodiment is used for describing implementation of the back off procedure of OBSS transmission spatial reuse. According to the description of the first embodiment to the third embodiment, as shown in FIG. 6, assuming that the station A detects a preamble signal of a wireless frame through a fixed CCA detection threshold specified by the system, it continues to receive the wireless frame, determines that the wireless frame is an OBSS wireless frame according to signaling domain SIG information of a physical frame head, and updates an OBSS timer according to time information in the signal domain SIG information. An end point of the OBSS timer is an end point of OBSS frame switching shown in FIG. 6.

Meanwhile, assuming that in the embodiment it is determined according to a dynamic CCA channel detection threshold that the energy of the preamble signal is lower than this channel detection threshold, thus the channel status is set to be idle. The dynamic CCA channel detection threshold may be calculated based on received signal strength indicator (RSSI) of a beacon frame of an AP received by the station A and a preset margin, such as RSSI-Margin, or is obtained through other information and ways.

Since the station A detects that the local BSS timer is not zero, it continues to monitor the channel using the fixed CCA detection threshold specified by the system until the local BSS timer is decreased to zero, i.e., the end point of the BSS timer shown in FIG. 6, and at this point, the OBSS timer of the station A is greater than zero and then the OBSS spatial reuse transmission process is started or resumed.

First, the station A performs back off according to fixed and dynamic channel detection thresholds. The station A first detects the physical channel using the fixed CCA channel detection threshold specified by the system. After the channel becomes idle within a specific inter-frame space, such as distributed inter-frame space (DIFS) or point inter-frame space (PIFS) or arbitration inter-frame space (AIFS), the channel starts to be detected at each back off time slot. If the back off time slot is idle, then the OBSS spatial reuse transmission back off counter will be decreased once. The station A continues to monitor the physic channel within each subsequent back off time slot using the fixed CCA detection threshold specified by the system until the OBSS spatial reuse transmission back off counter is decreased to zero.

After the OBSS spatial reuse transmission back off counter is decreased to zero, it is determined at this time that BSS timers of the station are all zero and an OBSS timer of the station A is greater than zero, the station A selects an appropriate frame exchange duration according to the value of the current local OBSS timer to start to send data, and ends the frame switching before the end point of the OBSS timer.

The fifth embodiment is used for describing implementation of the back off procedure of OBSS transmission spatial reuse. According to the first embodiment to the third embodiment, as shown in FIG. 7, assuming that the station A detects a preamble signal of a wireless frame through a fixed CCA detection threshold specified by the system, it continues to receive the wireless frame, and determines that the wireless frame is an OBSS wireless frame according to signaling domain SIG information of a physical frame head. The station A updates an OBSS timer according to time information in the signal domain SIG information. An end point of the OBSS timer is an end point of OBSS frame switching shown in FIG. 7.

Meanwhile, assuming that in this embodiment it is determined according to a dynamic CCA channel detection threshold that the energy of the preamble signal is lower than this channel detection threshold, thus the channel is set to be in an idle state. The dynamic CCA channel detection threshold may be calculated based on received signal strength indicator (RSSI) of a beacon frame of an AP received by the station A and a preset margin, such as RSSI-Margin, or is obtained through other information and ways.

Since the station A detects that the local BSS timer is not zero, it continues to monitor the channel using the fixed CCA detection threshold specified by the system. Before the local BSS timer is decreased to zero, i.e., before the end point of the BSS timer shown in FIG. 7, the station detects a preamble signal of a new wireless frame through the fixed CCA detection threshold specified by the system, and determines that the wireless frame belongs to the BSS according to the SIG information of the wireless frame and updates the local BSS timer to the new end point shown in FIG. 7 according to the time information in the SIG information. At this point, the value of the BSS timer is not zero, therefore the station A does not start the OBSS spatial reuse transmission process.

The sixth embodiment is used for describing implementation of the back off procedure of OBSS transmission spatial reuse. According to the first embodiment to the third embodiment, as shown in FIG. 8, assuming that the station A detects a preamble signal of a wireless frame through a fixed CCA detection threshold specified by the system, it continues to receive the wireless frame, and determines that the wireless frame is an OBSS wireless frame according to signaling domain SIG information of a physical frame head. The station A updates an OBSS timer according to time information in the signal domain SIG information. An end point of the OBSS timer is an end point of OBSS frame switching shown in FIG. 8.

Meanwhile, in this embodiment, assuming that it is determined according to a dynamic CCA channel detection threshold that the energy of the preamble signal is lower than this channel detection threshold, thus the channel is set to be in an idle state. The dynamic CCA channel detection threshold may be calculated based on received signal strength indicator (RSSI) of a beacon frame of an AP received by the station A and a preset margin, such as RSSI-Margin, or is obtained through other information and ways.

Since the station A detects that the local BSS timer is not zero, it continues to monitor the channel using the fixed CCA detection threshold specified by the system until the local BSS timer is decreased to zero, i.e., the end point of the BSS timer shown in FIG. 8, and at this point, the OBSS timer is not zero and then the OBSS spatial reuse transmission process is started or resumed.

First, the station A starts or resumes the second back off procedure according to fixed and dynamic channel detection thresholds. The station A detects the physical channel using the fixed CCA channel detection threshold specified by the system. After the channel becomes idle within a specific inter-frame space, such as DIFS or PIFS or AIFS, the channel starts to be detected at each back off time slot. If the back off time slot is idle, then the second back off counter will be decreased once. The station A continues to monitor the physic channel within each subsequent back off time slot using the fixed CCA detection threshold specified by the system.

After the second back off counter is decreased to zero, the station A detects a preamble signal of a new wireless frame through the fixed CCA detection threshold specified by the system, and determines that the wireless frame belongs to the BSS according to the received SIG information and updates the local BSS timer to the new end point shown in FIG. 8 according to the time information in the SIG information. The second back off counter suspends the decrement until the local BSS timer is zero.

After the end point of the local BSS timer shown in FIG. 8, at which point the OBSS timer is not zero, the station A resumes the second back off procedure. When the second back off continues to be decreased to zero, the station A selects an appropriate frame exchange duration according to the value of the current local OBSS timer to start to send data, and ends the frame switching before the end point of the OBSS timer.

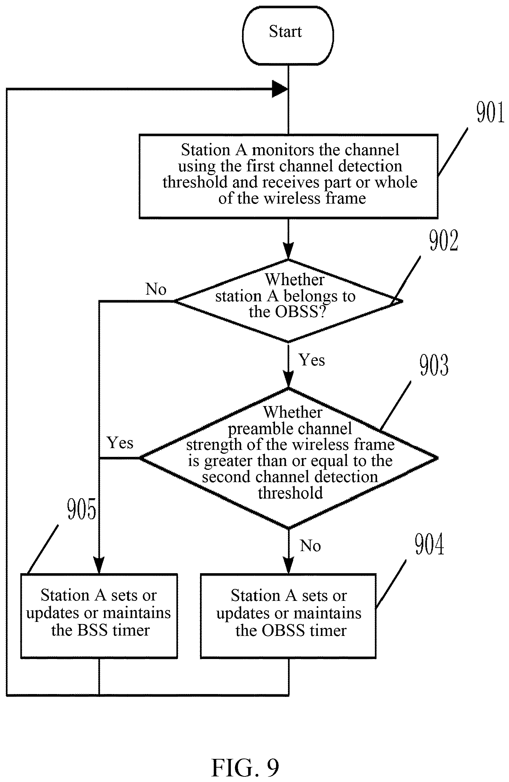

The seventh embodiment is used for describing the process of setting, updating and mainlining of BSS and OBSS timers. As shown in FIG. 9, assuming that the station A is provided locally with two timers, one is a BSS timer, or called network allocation vector (NAV), and the other is an OBSS timer, or called OBSS spatial reuse timer.

In Step 901, the station A monitors the channel using the first channel detection threshold and receives part or whole of the wireless frame.

In Step 902, the station A determines whether the currently received wireless frame is an OBSS wireless frame according to BSS identification information carried in the wireless frame, such as "BSS Color" information, BSS identification information, target address, sending address, BSS MAC address and to DS/from DS in a physical frame head. If it is determined that the currently received wireless frame belongs to the BSS, then step 905 is performed, and if it is determined that the currently received wireless frame belongs to the OBSS, then step 903 is performed.

In Step 903, it is determined according to the dynamic channel detection threshold, i.e., the second channel detection threshold whether preamble channel strength of the wireless frame is greater than or equal to this threshold at a probability of 90% within a period of time (e.g., 4 milliseconds); if yes, step 905 is performed, and if not, step 904 is performed.

In Step 904, the OBSS timer, i.e., the OBSS transmission spatial reuse timer is set or updated or maintained according to transmission duration information "Duration" or "TXOP Duration" carried in the wireless frame.

In Step 905, the BSS timer NAV is set or updated or maintained according to the transmission duration information "Duration" or "TXOP Duration" carried in the wireless frame.

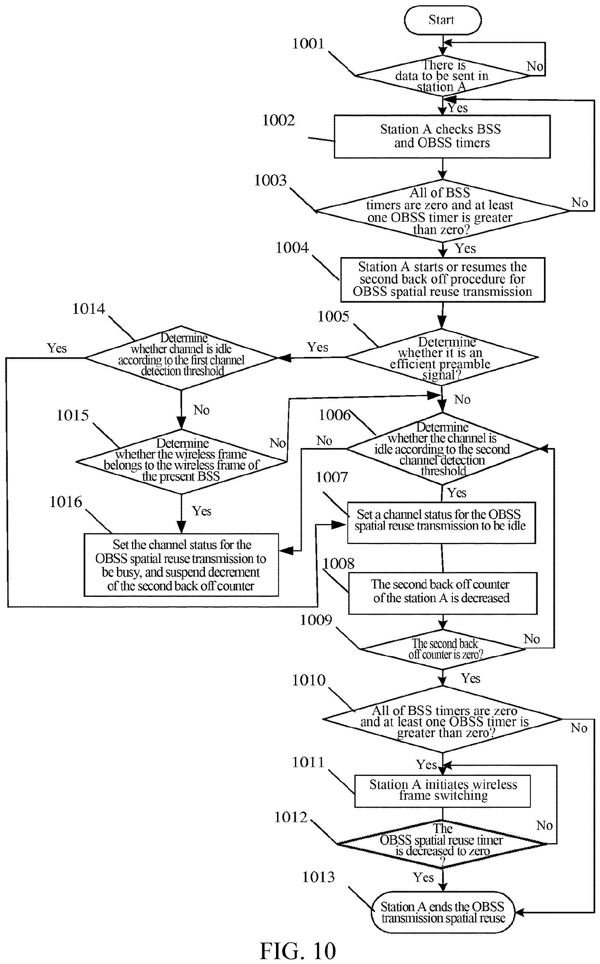

The eighth embodiment is used for describing an IBSS spatial reuse transmission back off procedure, as shown in FIG. 10.

In Step 1000, it is determined whether there is data to be sent in the station A, and if there is the data to be sent in the station A, step 1002 is performed.

In Step 1002, virtual channel detection is performed, that is, BSS and OBSS timers, i.e., NAV and OBSS spatial reuse timers in this embodiment, are checked.

In Step 1003, it is determined whether all of the BSS timers are zero and at least one OBSS timer is greater than zero, and if yes, step 1004 is performed, and if no, the process returns to step 1002.

In Step 1004, the station A suspends the current ongoing first back off procedure, and starts or resumes the OBSS spatial reuse back off procedure, called a second back off procedure. The first back off procedure performs back off according to a fixed first channel detection threshold, and the second back off procedure performs back off according to the fixed first channel detection threshold and a dynamic second channel detection threshold. The dynamic second channel detection may be varied dynamically according to signal strength of a system beacon frame received by the station A or varied dynamically according to other rules.

In Step 1005, after the second back off procedure, the station A continues to monitor the channel, determines whether an efficient preamble signal is detected, and if the efficient preamble signal is not detected, step 1006 is performed, otherwise, step 1014 is performed.

In Step 1006, it is determined whether the channel is idle according to the second channel detection threshold, and if the detected signal strength is less than the second channel detection threshold, i.e., the channel is idle, step 1007 is performed, and if the detected signal strength is greater than or equal to the second channel detection threshold, i.e., the channel is busy, step 1016 is performed.

In Step 1007, a channel status for the OBSS spatial reuse transmission "SR_CCA" is set to be idle.

In Step 1008, the second back off counter of the station A is decreased.

In Step 1009, the station A checks whether the second back off counter is zero, and if it is zero, step 1010 is performed, and if it is not, the process returns to step 1005.

In Step 1010, it is determined whether the follow condition is satisfied: the BSS timers NAVs are zero and an OBSS spatial reuse timer is greater than zero. If this condition is satisfied, step 1011 is performed; and if this condition is not satisfied, step 1013 is performed.

In Step 1011, wireless frame switching is initiated.

In Step 1012, it is determined whether the OBSS spatial reuse timer is decreased to zero, and if yes, step 1013 is performed, and if no, step 1011 continues to be performed.

In Step 1013, the station A ends the OBSS spatial reuse transmission.

In Step 1014, it is determined whether the channel is idle according to the first channel detection threshold, and when the detected signal strength is less than the first channel detection threshold, step 1007 is performed; and when the detected signal strength is greater than or equal to the first channel detection threshold, step 1015 is performed.

In Step 1015, if it is determined that the received wireless frame is a wireless frame of the present BSS according to BSS identification information carried in the wireless frame, step 1016 is performed; if it is a wireless frame of the OBSS, step 1006 is performed.

In Step 1016, the channel status for the OBSS spatial reuse transmission "SR_CCA" is set to be busy, and the decrement of the second back off counter is suspended, i.e., the second back off procedure is suspended.

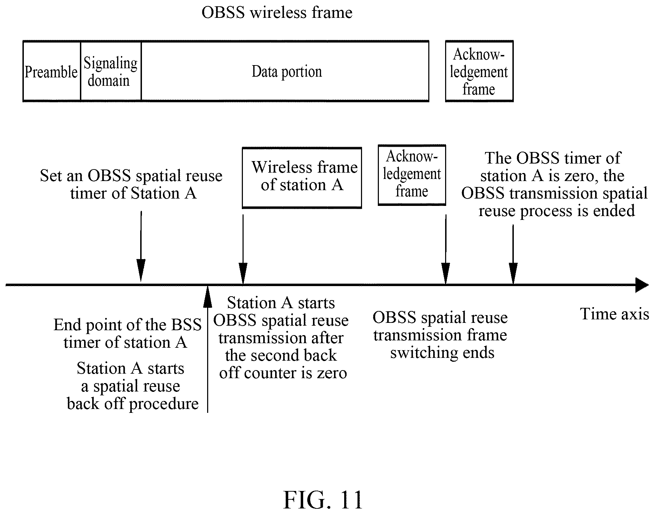

The ninth embodiment describes a process of starting an OBSS transmission spatial reuse back off procedure in conjunction with the eighth embodiment, as shown in FIG. 11. The station A monitors a channel, detects an efficient preamble signal using a first channel detection threshold -82dBm, and determines according to BSS identification information carried in a physical signaling domain in a wireless frame, i.e., BSS color information in this embodiment, that the wireless frame is an OBSS wireless frame. Meanwhile, it is further determined whether the channel is idle using a second channel detection threshold greater than the first channel detection threshold. In this embodiment, the strength of the preamble signal of the wireless frame is less than the second channel detection threshold, thus an BSS timer NAV of the station A keeps the original value, and an OBSS spatial reuse timer is set as transmission duration information (TXOP Duration, transmission opportunity duration) or time length information of the wireless frame carried in a signaling domain of the wireless frame.

When the station A detects that the value of the BSS timer NAV is zero, if at this point, the OBSS spatial reuse timer is greater than zero, the station A starts a spatial reuse back off procedure, i.e., a second back off procedure, and sets a value of a second back off counter randomly to begin decrement until the second back off counter is decreased to zero, then the station A starts to implement OBSS spatial reuse transmission.

The tenth embodiment describes a process of channel monitoring and back off decrement during an OBSS transmission spatial reuse back off procedure.

The station A monitors the channel during the OBSS transmission spatial reuse back off procedure.

When the station A does not detect an efficient preamble signal, it determines whether the channel is idle using the second channel detection threshold and sets a channel status "SR_CCA" of the OBSS channel spatial reuse process. When the detected signal strength is greater than or equal to the second channel detection threshold, the SR_CCA state is set to be "busy"; otherwise, the SR_CCA state is set to be "idle".

When the station A detects an efficient preamble signal, it determines whether the channel is idle using the second channel detection threshold and sets the channel status "SR_CCA" of the OBSS channel spatial reuse process. When the detected signal strength is less than the first channel detection threshold, the SR_CCA state is set to be "idle"; when the detected signal strength is greater than or equal to the first channel detection threshold, a wireless frame is further received. If it is determined that the wireless frame is a BSS wireless or the BSS identification information cannot be determined according to BSS identification information in the wireless frame, then the SR_CCA state is kept to be "busy"; if the wireless frame is an OBSS wireless frame and the detected signal strength is greater than or equal to the second channel detection threshold, then the SR_CCA state is kept to be "busy"; if the wireless frame is an OBSS wireless frame and the detected signal strength is greater than or equal to the second channel detection threshold, then the SR_CCA state is kept to be "idle".

The station A checks the state of SR_CCA, and it is "idle", then the second back off counter is decreased, and if it is "busy", then the second back off counter suspends the decrement.

The eleventh embodiment describes a suspending and resuming process during an OBSS transmission spatial reuse back off procedure.

The station A monitors a channel during the OBSS transmission spatial reuse back off procedure, suspends the OBSS transmission back off procedure when the station A detects an efficient preamble signal and determines according to BSS identification information carried in a wireless frame that the wireless frame is the present BSS wireless frame or an OBSS wireless frame of which the signal strength is greater than or equal to the second channel detection threshold, and updates the value of the current BSS timer NAV according to time information carried in the wireless frame, such as TXOP duration, if the TXOP duration is greater than the value of the current BSS timer.

The station A checks values of the BSS timer NAV and OBSS timer. If the BSS timer NAV is decreased to zero and the OBSS timer is non-zero, then the station A resumes the OBSS spatial reuse back off procedure and continues to decrease the second back off counter according to state indication of SR_CCA until the second back off counter is decreased to zero, then the station A starts to implement OBSS spatial reuse transmission, and stops the current OBSS spatial reuse back off procedure if the OBSS timer is decreased to zero.

Those ordinarily skilled in the art may understand that all or part of steps in the embodiment described above can be carried out using computer program flows. The computer program may be stored in a computer readable medium and executed on a corresponding hardware platform (such as system, device, apparatus, appliance, etc.). When the computer program is executed, one or a combination of the steps in the method embodiment may be executed.

Alternatively, all or part of the steps in the embodiment described above may also be implemented using integrated circuits. These steps may be fabricated into separated integrated circuit modules respectively, or multiple modules or steps of them may be fabricated into a single integrated circuit module.

Various apparatus/functional modules/functional units in the embodiment described above may be impelemted using general-purpose computing apparatuses, or they may be centralized on a single computing apparatus or may be distributed in a network composed of multiple computing apparatuses.

When various apparatus/functional modules/functional units in the embodiment described above are impelemented in a form of software function module or sold or used as independent products, they can be stored in a computer readable storage medium. The computer readable storage medium mentioned above may be a read only memory, a magnetic disk or optical disk.

### Industrial Applicability

The technical scheme provided by the embodiments of the present invention utilizes the timers to record transmission time of frame switching of the station in the BSS and improves the reliability of spatial reuse transmission through a complete and efficient mechanism. On one hand, the ongoing transmission of the BSS will be ensured to be undisturbed while the opportunity of frequency reuse is improved, and on the other hand, fairness of competition for all of the stations in the back off procedure after the transmission spatial reuse is started is guaranteed.

## Claims

1. A method for transmitting data, comprising: when there is data to be sent in a station, determining whether there is a station using a channel in a basic service set, BSS, to which the station belongs, and an overlapping BSS, OBSS, using virtual channel detection;
when determining that there is no station using the channel in the BSS to which the station belongs and there is a station using the channel in the OBSS to which the station belongs, starting or resuming a back off procedure of the station for OBSS spatial reuse transmission; and
monitoring the channel in the back off procedure for the OBSS spatial reuse transmission according to a fixed first channel detection threshold and a dynamically adjusted second channel detection threshold, transmitting data when the back off procedure for the OBSS spatial reuse transmission ends.

2. The method according to claim 1, further comprising: setting up one or more BSS timers and one or more OBSS timers in the station.

3. The method according to claim 2, further comprising:
the station detecting a preamble signal of an identifiable wireless frame through the fixed first channel detection threshold, receiving the wireless frame, and setting or updating or maintaining a value/values of the BSS timer/timers or the OBSS timer/timers according to BSS identification information and time information of part or whole of the received wireless frame.

4. The method according to claim 3, wherein when the BSS identification information indicates a BSS to which the station receiving the wireless frame belongs, when the BSS timer/timers satisfies/satisfy a preset updating condition, the value/values of the BSS timer/timers is/are updated according to the time information carried in the wireless frame; and
when the BSS identification information indicates an OBSS of the station receiving the wireless frame, when the OBSS timer/timers satisfies/satisfy a preset updating condition, the value/values of the OBSS timer/timers is/are updated according to the time information carried in the wireless frame.

5. The method according to claim 3, wherein when the BSS identification information indicates the OBSS of the station receiving the wireless frame, the method further comprises:
detecting whether a physical channel is idle according to the dynamically adjusted second channel detection threshold, and when signal strength of the preamble signal of the received wireless frame is less than the second channel detection threshold, determining that the physical channel is idle.

6. The method according to claim 4, wherein determining whether there is a station using a channel in a BSS to which the station belongs and in an OBSS using virtual channel detection comprises:
checking the BSS timer/timers, when there is a timer which is not zero in the BSS timer/timers, determining that there is a station using the channel in the BSS to which the station belongs, and keeping monitoring the channel;
when the BSS timer/timers is/are zero, determining that there is no station using the channel in the BSS to which the station belongs; and
checking the OBSS timer/timers, and when there is at least one timer which is greater than zero in the OBSS timer/timers, determining that there is a station using the channel in the OBSS of the station.

7. The method according to claim 2, wherein the BSS timer is a BSS network allocation vector, NAV, or BSS response indication delay, RID, timer, or BSS NAV and BSS RID timer; and
the OBSS timer is an OBSS NAV, or OBSS RID timer, or OBSS NAV and BSS RID timer.

8. The method according to claim 4, wherein
when the BSS timer is a BSS NAV and the OBBS timer is an OBBS NAV,
the updating condition is to: perform updating when the time information carried in the received wireless frame belonging to the BSS is greater than a value of a current BSS NAV; keep unchanged when the time information carried in the received wireless frame belonging to the BSS is less than or equal to the value of the current BSS NAV; perform updating when the time information carried in the received wireless frame belonging to the OBSS is greater than a value of a current OBSS NAV; and keep unchanged when the time information carried in the received wireless frame belonging to the OBSS is less than or equal to the value of the current OBSS NAV; or
when the BSS timer is a BSS RID timer and the OBBS timer is an OBBS RID timer,
the updating condition is to: update the BSS RID timer/timers when the time information is carried in a physical frame head in the received wireless frame belonging to the present BSS; and update the OBSS RID timer/timers when the time information is carried in the physical frame head in the received wireless frame belonging to the present OBSS.

9. The method according to claim 2 or 3, wherein starting or resuming a back off procedure of the station for OBSS spatial reuse transmission comprises:
suspending an ongoing first back off procedure before the back off procedure for the OBSS spatial reuse transmission is started; and at the same time, starting or resuming a second back off counter of a second back off procedure for the OBSS spatial reuse transmission.

10. The method according to claim 9, wherein monitoring the channel in the back off procedure for the OBSS spatial reuse transmission according to a fixed first channel detection threshold and a dynamically adjusted second channel detection threshold comprises:
the station determining whether the physical channel is idle according to the first channel detection threshold, decreasing the second back off counter when the channel is idle, and continuing to determine whether the physical channel is idle according to the first channel detection threshold when the second back off counter is not zero;
when it is determined that the physical channel is busy according to the first channel detection threshold and part or whole of a new wireless frame is received, determining identification of the wireless frame according to BSS identification information carried in the wireless frame;
when it is determined that the wireless frame belongs to the BSS and that the station itself is not a target receiving station according to address information in the wireless frame, setting or updating or maintaining the BSS timer/timers according to the time information in the wireless frame and ending the second back off procedure;
when it is determined that the wireless frame belongs to the OBSS, setting or updating or maintaining the OBSS timer/timers according to the time information in the wireless frame, determining whether the physical channel is idle according to the second channel detection threshold, decreasing the second back off counter when the physical channel is idle, and continuing to determine whether the physical channel is idle according to the first channel detection threshold when the second back off counter is not zero; suspending the decrement of the second back off counter when it is determined that the physical channel is busy according to the second channel detection threshold, continuing to monitor the channel according to the first channel detection threshold when currently all of the BSS timer/timers is/are zero and at least one OBSS timer is greater than zero, and ending the second back off procedure and resuming the first back off procedure when currently at least one BSS timer is not zero or all of the OBSS timer/timers is/are zero; and
when the second back off counter is decreased to zero, ending the back off procedure for the OBSS spatial reuse transmission when all of the BSS timer/timers is/are zero and at least one OBSS timer is greater than zero, and the station selecting an appropriate frame exchange duration according to a value of a current OBSS timer to start to send the data; and ending the second back off procedure and resuming the first back off procedure when at least one BSS timer is greater than zero or all of the OBSS timer/timers is/are zero.

11. The method according to claim 10, wherein when the station determines that the physical channel is busy according to the first channel detection threshold and receives the wireless frame successfully but is unable to determine whether the wireless frame belongs to the BSS or the OBSS, the method further comprises:
the station setting or updating or maintaining the BSS timer/timers according to the address information and the time information in the wireless frame, ending the second back off procedure and resuming the first back off procedure.

12. The method according to claim 9 or 10, wherein after the second back off procedure is ended and the first back off procedure is resumed, the method further comprises:
the station resuming decrement of a first back off counter.

13. The method according to claim 3, wherein the method further comprises:
when the BSS identification information indicates the BSS to which the station receiving the wireless frame belongs, setting or updating or maintaining the value/values of the BSS timer/timers according to the time information carried in the wireless frame; and
when the BSS identification information indicates the OBSS of the station receiving the wireless frame, according to the signal strength of the preamble signal of the received wireless frame, setting or updating or maintaining the values/values of the BSS timer/timers according to the time information carried in the wireless frame when a preset determination condition is satisfied, and setting or updating or maintaining the values/values of the OBSS timer/timers according to the time information carried in the wireless frame when the preset determination condition is not satisfied.

14. The method according to claim 13, wherein the preset determination condition is that the signal strength is greater than or equal to the second channel detection threshold in a preset duration range.

15. The method according to claim 13, wherein determining whether there is a station using a channel in a BSS to which the station belongs and in an OBSS using virtual channel detection comprises:
checking the BSS timer/timers, and when there is a timer which is not zero in the BSS timer/timers, determining that there is a station using the channel in the BSS to which the station belongs or in an OBSS;
when the BSS timer/timers is/are zero, determining that there is no station using the channel in the BSS to which the station belongs; and
checking the OBSS timer/timers, and when there is at least one timer which is greater than zero in the OBSS timer/timers, determining that there is a station using the channel in the OBSS of the station.

16. The method according to claim 13, wherein
the BSS timer is a network allocation vector, NAV, or response indication delay, RID, timer, or NAV and RID timer; and
the OBSS timer is an OBSS spatial reuse transmission timer, wherein the OBSS spatial reuse transmission timer is set, updated and maintained according to time information carried in the received OBSS wireless frame of which the signal strength is lower than the second channel detection threshold.

17. The method according to claim 13, wherein monitoring the channel in the back off procedure for the OBSS spatial reuse transmission according to a fixed first channel detection threshold and a dynamically adjusted second channel detection threshold comprises:
the station performing the back off procedure for the OBSS spatial reuse transmission and monitoring the channel when the value/values the OBSS timer/timers is/are not zero and a current BSS timer/timers is/are zero;
determining whether the physical channel is idle according to the second channel detection threshold when the station does not detect an efficient preamble signal, setting a channel status to be idle for the OBSS spatial reuse transmission when the detected signal strength is less than the second channel detection threshold, and setting the channel status to be busy for the OBSS spatial reuse transmission when the detected signal strength is greater than or equal to the second channel detection threshold;
determining whether the physical channel is idle according to the first channel detection threshold when the station detects an efficient preamble signal, setting the channel status to be idle for the OBSS spatial reuse transmission when the detected signal strength is less than the first channel detection threshold, and setting the channel status to be busy for the OBSS spatial reuse transmission when the detected signal strength is greater than or equal to the first channel detection threshold;
keeping the channel status to be busy for the OBSS spatial reuse transmission when the station detects the efficient preamble signal and determines that the received wireless frame is a wireless frame of the BSS to which the station belongs;
keeping the channel status to be busy for the OBSS spatial reuse transmission when the station detects the efficient preamble signal and determines that the received wireless frame is a wireless frame of the OBSS and the detected signal strength is greater than or equal to the second channel detection threshold;
setting the channel status to be idle for the OBSS spatial reuse transmission when the station detects the efficient preamble signal and determines that the received wireless frame is the wireless frame of the OBSS and the detected signal strength is less than the second channel detection threshold.

18. The method according to claim 17, wherein the back off procedure for the OBSS spatial reuse transmission comprises:
the station performing operation of the decrement of the second back off counter in the back off procedure for the OBSS spatial reuse transmission according to indication of the channel status for the OBSS spatial reuse transmission, decreasing the second back off counter when the channel status for the OBSS spatial reuse transmission is indicated to be idle, and continuing the back off procedure for the OBSS spatial reuse transmission; and suspending the decrement of the second back off counter when the channel status for the OBSS spatial reuse transmission is indicated to be busy.

19. The method according to claim 17, wherein the back off procedure for the OBSS spatial reuse transmission further comprises:
determining that the station itself is not the target receiving station according to the address information in the wireless frame when the station determines that the channel is busy according to the second channel detection threshold and receives part or whole of a new wireless frame, setting or updating or maintaining the BSS timer/timers according to the time information in the wireless frame, and suspending or ending the second back off procedure.

20. The method according to claim 18, wherein ending the back off procedure for the OBSS spatial reuse transmission and starting to send the data comprises:
when the second back off counter is decreased to zero, ending the back off procedure for the OBSS spatial reuse transmission when all of the BSS timer/timers is/are zero and at least one OBSS timer is greater than zero, and the station selecting an appropriate frame exchange duration according to the value of the current OBSS timer to start to send the data.

21. The method according to claim 18, wherein ending the back off procedure for the OBSS spatial reuse transmission further comprises: ending the back off procedure for the OBSS spatial reuse transmission when the OBSS timer/timers is/are zero.

22. A station, comprising a first detection module, a processing module and a second detection module, wherein
the first detection module is arranged to, when there is data to be sent in the station, send a starting or resuming notification to the processing module when determining that there is no station using a channel in a basic service set, BSS, to which the station belongs using virtual channel detection and determining that there is a station using the channel in an overlapping BSS, OBSS, of the station using the virtual channel detection;
the processing module is arranged to receive the starting or resuming notification from the first detection module, start or resume a back off procedure for OBSS spatial reuse transmission of the station, and notify the second detection module to monitor a channel in the back off procedure for the OBSS spatial reuse transmission, transmit data when it is determined according to a monitoring result from the second detection module that the back off procedure for the OBSS spatial reuse transmission ends; and
the second detection module is arranged to receive the notification from the processing module, monitor the channel in the back off procedure for the OBSS spatial reuse transmission according to a fixed first channel detection threshold and a dynamically adjusted second channel detection threshold, and send the monitoring result to the processing module.

23. A computer readable storage medium, in which computer executable instructions are stored for performing the method according to any one of claims 1-21.
